# FASCICULE DE BREVET EUROPEEN

(11) **EP 0 593 363 B1**
(45) Date de publication et mention de la délivrance du brevet: **26.08.1998**
(21) Numéro de dépôt: 93402528.9
(22) Date de dépôt: 14.10.1993
(51) Int. Cl.: C03B 23/033, C03B 23/025

(54) **Procédé et installation de bombage de feuilles de verre**
Verfahren und Vorrichtung zum Biegen von Glasscheiben
Method and apparatus for bending glass sheets

(30) Priorité: 15.10.1992 FR 9212329
(43) Date de publication de la demande: 20.04.1994
(73) Titulaire: SAINT-GOBAIN VITRAGE, 92400 Courbevoie (FR)
(72) Inventeur: Letemps, Bernard, F-60150 Thourotte (FR); Leclercq, Jacques, F-80240 Roisel (FR)
(74) Mandataire: Le Vaguerèse, Sylvain Jacques

(56) Documents cités:
- EP-A- 0 133 113
- US-A- 3 545 951
- US-A- 4 773 925

## Description

L'invention se rapporte au bombage et éventuellement la trempe de feuilles de verre portées à leur température de ramollissement.

Plus précisément, l'invention se rapporte à une installation de bombage dans laquelle les feuilles de verre sont bombées et refroidies lors de leur défilement, sur un convoyeur en forme.

Une technique de bombage est notamment décrite dans le brevet FR-A-2 242 219 qui propose de préchauffer les feuilles de verre à température de ramollissement puis de les faire défiler sur un convoyeur prolongeant sans cassure le chemin suivi par la feuille de verre depuis le four, ledit convoyeur formant un lit de conformation passant au travers d'une zone terminale de refroidissement et étant constitué par des éléments tournants disposés selon un trajet à profil courbe dans la direction de défilement des feuilles de verre. La trajectoire suivie par la feuille de verre n'est alors pas plane mais suit le profil qui doit être conféré à la feuille de verre dans la direction parallèle à la direction de défilement. Dans la pratique, les éléments sont le plus souvent disposés selon un profil circulaire avec une concavité de préférence tournée vers le haut, définissant ainsi un cylindre dont les génératrices sont horizontales et perpendiculaires à la direction d'amenée du verre.

Le rayon du trajet que suit la feuille de verre sur les éléments tournants correspond ainsi au rayon de la courbure qui lui est conféré dans la direction parallèle à la direction de défilement. A cette première courbure peut venir s'ajouter une courbure secondaire obtenue par l'utilisation d'éléments tournants non pas constitués par des tiges droites non cintrées mais par des rouleaux en forme par exemple du type guidons, rouleaux ventrus associés à des diabolos ou encore des tiges contre-flèchies.

Cette technique opère sur des feuilles de verre continuellement en mouvement et peut être mise en oeuvre avec des cadences de production avantageusement très grandes.

D'autre part, la qualité du bombage obtenue par passage sur des rouleaux est bonne. En effet, le passage du verre sur des rouleaux associé à de grandes vitesses permet un formage de bonne qualité et fournit des feuilles de verre bombées avec une grande rectitude du galbe.

Un autre avantage de cette technique par rapport à d'autres permettant également le formage hors du four est qu'il n'est pas nécessaire de surchauffer. En effet, les feuilles de verre arrivant du four avec une grande vitesse, sont formées très rapidement et se refroidissent donc relativement peu avant la trempe.

Un inconvénient de cette technique est que les rayons de courbures que l'on peut obtenir, notamment le rayon de courbure principale, sont limités. En effet, l'entrée sur le dispositif de bombage, c'est-à-dire sur le convoyeur courbe doit se faire sans cassure par rapport au chemin suivi par la feuille de verre dans le four. Ce chemin étant habituellement horizontal, l'entrée du convoyeur est tangentielle à l'horizontale. Par ailleurs, le point de sortie de la feuille de verre correspond au maximum à une position du convoyeur tangentielle à la verticale.

Au-delà de cette position, il devient très délicat voire impossible de récupérer les feuilles de verre formées. En effet, le convoyeur décrivant une trajectoire circulaire, si le point de sortie est au-delà de cette position, les feuilles de verre sont entraînées vers l'intérieur de la concavité et la récupération de ces feuilles est alors pratiquement impossible, du moins si on ne tolère pas d'importants taux de casse. Le profil du convoyeur ainsi défini correspond donc à une portion de cercle dont la longueur est au maximum un quart de la circonférence.

Dans cette longueur, il faut réaliser le bombage et le refroidissement, notamment la trempe. Comme la vitesse de défilement doit être supérieure à une vitesse limite afin d'éviter des défauts de bombage et optiques et que la pression de refroidissement ne peut être augmentée infiniment, une distance minimale est imposée pour la réalisation du bombage et du refroidissement. En conséquence, cette distance devant être contenue sur un quart de tour, le rayon de courbure du convoyeur est imposé. Ces impératifs techniques limitent ainsi la technique à des rayons de courbure principale supérieurs à un mètre.

Or de plus en plus, les exigences des clients, notamment des constructeurs automobiles s'orientent vers des vitrages tels que des vitrages de custodes, encore plus bombés, avec par exemple des rayons de courbure de 900 mm.

De telles courbures ne peuvent être obtenues que par application contre une forme de bombage et/ou un lâcher sur un cadre de bombage. Cette méthode suppose bien sûr une interruption du défilement des feuilles de verre. Les rendements de production sont par conséquent beaucoup moins intéressants.

L'invention a pour objet un procédé et une installation permettant le bombage de feuilles de verre conduisant à des rayons de courbure inférieurs à un mètre, tout en maintenant un défilement continu des feuilles de verre.

Le problème posé par les techniques actuelles qui ne permettent pas de concilier des rayons de courbure inférieurs à un mètre avec un défilement continu des plaques à traiter est résolu par un procédé de bombage et de refroidissement notamment par trempe thermique, de feuilles de verre, selon lequel une feuille de verre défile successivement sur un convoyeur d'amenée en sortie d'un four chauffant les feuilles de verre à la température de bombage, sur un convoyeur central, constitué par une série d'éléments tournants disposés selon un profil courbe, et sur un convoyeur de refroidissement, l'un au moins de ces trois convoyeurs étant basculé pendant le défilement d'une feuille de verre, de sorte que celle-ci suive un chemin continu en passant successivement sur ces trois convoyeurs et que l'angle formé par la tangente à l'extrémité de sortie du convoyeur de refroidissement au moment de la sortie d'une feuille de verre et l'horizontale, fasse au plus un angle de 90°. Le déplacement peut se faire notamment par basculement autour d'un axe.

Le procédé assure alors un trajet sans cassure aux plaques et permet d'allonger la zone de bombage-trempe au-delà du quart de circonférence d'un cercle dont le rayon correspondrait au rayon de courbure principale conférée à la feuille de verre et autorise ainsi le bombage de feuilles de verre avec un rayon inférieur à un mètre tout en maintenant un défilement continu des feuilles de verre depuis le four jusqu'à la trempe.

L'invention propose également une installation pour la mise en oeuvre du procédé. Selon l'invention, cette installation comporte un convoyeur d'amenée en sortie d'un four chauffant les feuilles de verre à la température de bombage, un convoyeur central, constitué par une série d'éléments tournants disposés selon un profil courbe et un convoyeur de refroidissement, l'un au moins de ces trois convoyeurs étant basculant.

Une installation préférée selon l'invention correspond au cas où le convoyeur central est basculant. En effet, la mobilité de l'un au moins des convoyeurs assure le résultat escompté. Cependant, il apparaît clairement que la mobilité du convoyeur d'amenée, en partie dans le four, et la mobilité du convoyeur de refroidissement, comportant tout le dispositif de refroidissement, sont plus difficilement réalisables. La suite de cet exposé se limitera donc à la solution préférée qui correspond au convoyeur central mobile.

De façon préférée, le convoyeur de refroidissement est constitué par une série d'éléments tournants disposés selon le même profil courbe que celui du convoyeur mobile.

De façon préférée encore, ce profil courbe est un profil circulaire à concavité dirigée vers le haut.

Dans une variante selon l'invention, une partie du dispositif de refroidissement est portée par le convoyeur mobile, ce qui permet le bombage des feuilles de verre avec un rayon encore inférieur.

Selon cette variante, le convoyeur de refroidissement peut être constitué par une série d'éléments tournants disposés selon un profil courbe présentant un rayon de courbure différent de celui du convoyeur mobile. Ceci permet lors d'un changement de fabrication s'accompagnant d'un changement de courbure, de modifier uniquement le convoyeur central et de conserver le convoyeur de refroidissement. En effet, le convoyeur central comportant une partie du dispositif de refroidissement, une feuille de verre est suffisamment figée lorsqu'elle quitte ce convoyeur central pour supporter un passage, sans se détériorer, sur un convoyeur, en l'occurrence de refroidissement, qui présente une courbure légèrement différente de celle qui vient d'être conférée à la feuille de verre.

Les dimensions du convoyeur mobile doivent permettre le passage des plaques d'une extrémité à l'autre de cette zone mobile durant le temps séparant le passage d'une position à l'autre, tout en maintenant la vitesse de défilement des plaques constantes et en assurant le bombage.

Avantageusement, les dimensions du convoyeur mobile sont définies pour qu'au début du basculement une feuille de verre vienne de s'engager totalement sur le convoyeur mobile et qu'en fin de basculement l'extrémité avant de la feuille de verre arrive en bout dudit convoyeur mobile.

Il est possible d'ajouter à ce convoyeur mobile des éléments tournants supérieurs de façon à éviter tout écart des feuilles de verre lors de leur défilement et notamment lors du mouvement de la zone mobile.

De façon préférée, d'éventuels éléments tournants supérieurs du convoyeur mobile sont espacés de la surface courbe représentés par les éléments tournants inférieurs de ce convoyeur, d'une distance supérieure d'au moins 0,3 mm, et généralement de 0,4 à 0,6 mm, à l'épaisseur des feuilles de verre à traiter. De cette façon, ces éléments tournants supérieurs n'interviennent que lors d'un écart de ces feuilles de verre et n'ont pas d'autres fonctions. Ils ne risquent pas ainsi d'endommager les feuilles de verre lors de leur défilement.

Sur ce convoyeur mobile qui représente la zone de bombage, il est également possible de prévoir une aide à l'avancement juste avant la zone de refroidissement car l'air de refroidissement qui est soufflé a tendance à ralentir la progression des feuilles de verre.

Selon un mode préféré de l'invention, à l'extrémité du convoyeur mobile, au moins un et de préférence un seul élément tournant supérieur est monté espacé de l'élément tournant inférieur qui lui fait face d'une distance telle qu'il est en appui sur la face supérieure des feuilles de verre lorsqu'elles défilent sous lui. Ce couple d'éléments tournants fournit l'aide à l'avancement nécessaire pour l'entrée dans la zone de refroidissement. Il a l'avantage de réaliser simultanément une barrière à l'air de refroidissement vers la zone de bombage de façon à ce que les feuilles de verre ne soient pas refroidies trop tôt.

Dans une variante, les éléments tournants sont des rouleaux cylindriques droits.

Dans une autre variante, les éléments tournants sont en forme et permettent de conférer une forme plus complexe avec notamment une courbure transversale à la feuille de verre. Il peut s'agir par exemple d'éléments du type rouleaux ventrus associés à des diabolos ou encore du type tiges contrefléchies ou cintrées. L'installation prévoit également en sortie de zone de refroidissement un moyen permettant la réception et le transport des feuilles de verre bombées.

L'installation ainsi présentée peut être réalisée avec un profil du convoyeur central dont le rayon de courbure est compris entre 800 mm et l'infini. Elle est facilement réalisable et peut s'adapter aisément, tout comme les installations fixes utilisées actuellement, à différents rayons de courbure.

D'autres détails et caractéristiques avantageux de l'invention ressortent ci-après de la description d'un exemple de réalisation de cette installation décrite en référence aux figures 1, 2 et 3 qui représentent :
- figure 1 : une coupe d'un schéma représentant un exemple de réalisation de l'invention en position de réception de la feuille de verre sortant du four,
- figure 2 : une coupe d'un schéma représentant un exemple de réalisation de l'invention dans la position permettant le passage du convoyeur mobile au convoyeur de refroidissement,
- figure 3 : un exemple schématisé à une échelle 1/10ème faisant figurer les deux positions du convoyeur mobile.

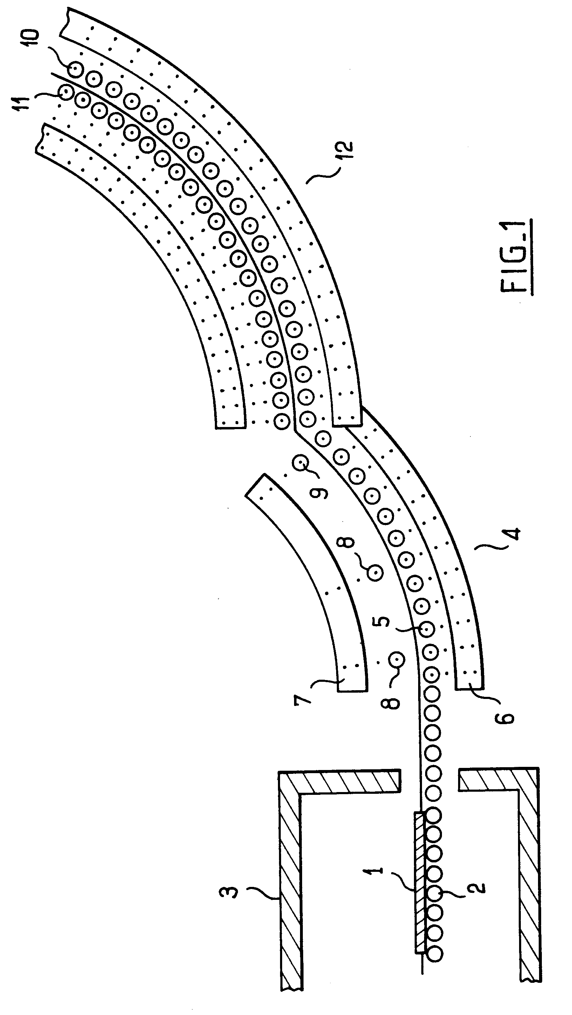

Sur la figure 1 qui représente schématiquement une réalisation possible de l'invention, une feuille de verre 1 est transportée par un convoyeur d'amenée 2 depuis un four 3. Dans cette représentation, le convoyeur mobile 4 est positionné de telle façon que la feuille de verre 1 poursuive un chemin sans cassure pour accéder au convoyeur 4. La feuille de verre 1 passe alors sur un ensemble d'éléments tournants 5 tels que des rouleaux, qui forme un profil dont le rayon de courbure est déterminé en fonction de celui à donner à la feuille de verre 1. Les rouleaux 5 sont portés par un élément inférieur 6 qui porte également les dispositifs permettant d'entraîner ces rouleaux 5 en rotation. Ces dispositifs ne sont pas représentés sur les figures. Il peut s'agir de tous systèmes connus de l'homme du métier, tels qu'un arbre moteur relié par chaîne aux rouleaux pour les entraîner en rotation.

L'élément supérieur 7 comporte également quelques rouleaux 8 mais qui ont uniquement pour fonction d'éviter tout écart de la feuille de verre 1 lors de son défilement, au cas où elle aurait tendance à se détacher du convoyeur, notamment lors du mouvement du convoyeur mobile 4. En règle générale, ces rouleaux 8 n'ont aucun contact avec la feuille de verre 1 qui défile. Ceci est préférable car les feuilles de verre 1 peuvent comporter un émail au moins sur une partie de leur surface, qui pourrait être détérioré par un contact avec ces rouleaux 8.

Les rouleaux 8 sont maintenus à une distance supérieure d'au moins 0,3 mm à l'épaisseur du verre, des rouleaux 5 et n'ont donc pas de contact avec les feuilles de verre en fonctionnement normal. D'autre part, ils ne sont pas entraînés en rotation par un moyen moteur. La position du rouleau 9 faisant face au dernier rouleau 5 du convoyeur 4 est différente. Il sera revenu sur ce rouleau 9 par la suite.

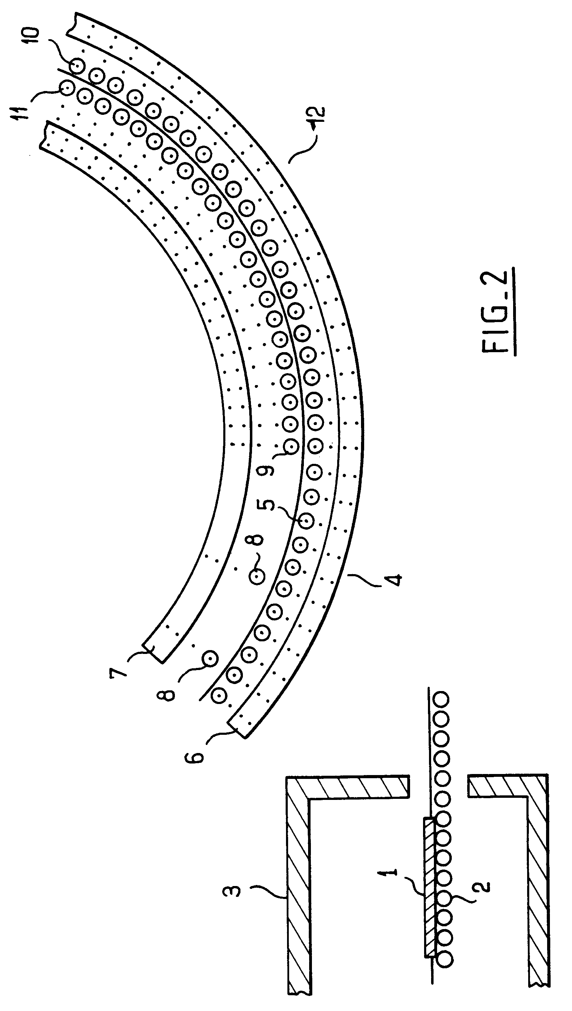

Sur la figure 2, l'installation est représentée dans la seconde position. Cette position permet à la feuille de verre 1 de passer du convoyeur mobile 4 au convoyeur de refroidissement 12 sans cassure. Le rayon de courbure de ces deux parties est le même de sorte que les feuilles de verre 1 bombées qui arrivent dans la zone de refroidissement soient maintenues dans leur forme. Lors du passage du convoyeur mobile 4 au convoyeur de refroidissement 12, il est intéressant de prévoir un moyen permettant une aide à l'avancement car les gaz soufflés dans la zone de refroidissement s'opposent à la progression des feuilles de verre 1. Pour cela, il est de préférence prévu un rouleau 9 faisant face au dernier rouleau 5 du convoyeur 4, qui vient en contact avec la feuille de verre 1 et permet ainsi un meilleur entraînement de celle-ci. Cet ensemble composé du rouleau 9 et du rouleau 5 qui lui fait face permet également de former une barrière au gaz de refroidissement et d'éviter ainsi le refroidissement des feuilles de verre dans la zone de bombage.

Sur le convoyeur de refroidissement 12, les feuilles de verre 1 sont maintenues en permanence entre des rouleaux inférieurs 10 et des rouleaux supérieurs 11. Les dispositifs de montage, d'entraînement et de réglage de ces différents rouleaux sont semblables à ceux du convoyeur mobile 4. Ces dispositifs ainsi que les buses permettant de souffler les gaz pour le refroidissement ne sont pas représentés sur les figures. A l'issue de cette zone de refroidissement 12, un dispositif non représenté sur les figures, est prévu pour la réception des feuilles de verre 1. Il peut s'agir par exemple du dispositif décrit dans la demande de brevet FR-A-2 549 465 où il est question d'un moyen de maintien supérieur, associé au dernier élément tournant du convoyeur de refroidissement 12, qui bascule et transmet la feuille de verre bombée 1 sur un convoyeur dont le premier élément est le dernier élément tournant du convoyeur de refroidissement 12.

En ce qui concerne le mécanisme permettant le basculement du convoyeur mobile 4, il est selon cette représentation placé entre le convoyeur 4 et le convoyeur de refroidissement 12. Il peut s'agir d'un axe solidaire par exemple du convoyeur de refroidissement 12 autour duquel peut tourner la partie mobile 4. Cet axe n'est pas représenté sur les figures 1 et 2. Le dispositif, non représenté, permettant de déplacer le convoyeur mobile peut être tout système mécanique connu de l'homme du métier, tel qu'un arbre moteur raccordé à l'axe ou bien un système mécanique dont le point de contact avec le convoyeur mobile 4 est le plus éloigné possible de l'axe de façon à augmenter le couple de la force exercée. D'autre part, pour déclencher le passage d'une position à l'autre, il est possible d'adapter un élément tel qu'un capteur permettant de détecter le chargement d'une feuille de verre 1 sur le convoyeur mobile 4 afin de déclencher le basculement puis connaissant la longueur du convoyeur mobile 4, la vitesse de défilement des feuilles de verre et leur longueur, il est possible de calculer le temps nécessaire pour le basculement et le passage de la feuille de verre du convoyeur mobile 4 vers le convoyeur de refroidissement 12. Le basculement inverse s'effectue alors une fois ce temps écoulé. Par ailleurs, la dimension du chemin parcouru par les feuilles de verres 1 sur le convoyeur mobile 4 est définie par la vitesse de défilement de ces feuilles de verre 1 et par la longueur des feuilles. En effet, durant le basculement d'une position vers l'autre, les feuilles de verre doivent passer d'une extrémité à l'autre du convoyeur mobile 4. De même, l'écartement entre deux feuilles de verre est prévu de sorte qu'une nouvelle feuille de verre arrive en limite du convoyeur d'amenée 2 en sortie du four, au plus tôt lorsque le convoyeur mobile 4 revient en position pour la recevoir.

Dans cette description, les éléments tournants ont été considérés comme étant des rouleaux. Cette situation conduit à des feuilles de verre comportant une simple courbure. Dans la mesure où un bombage plus complexe est recherché, ces éléments tournants peuvent être par exemple des éléments cintrés.

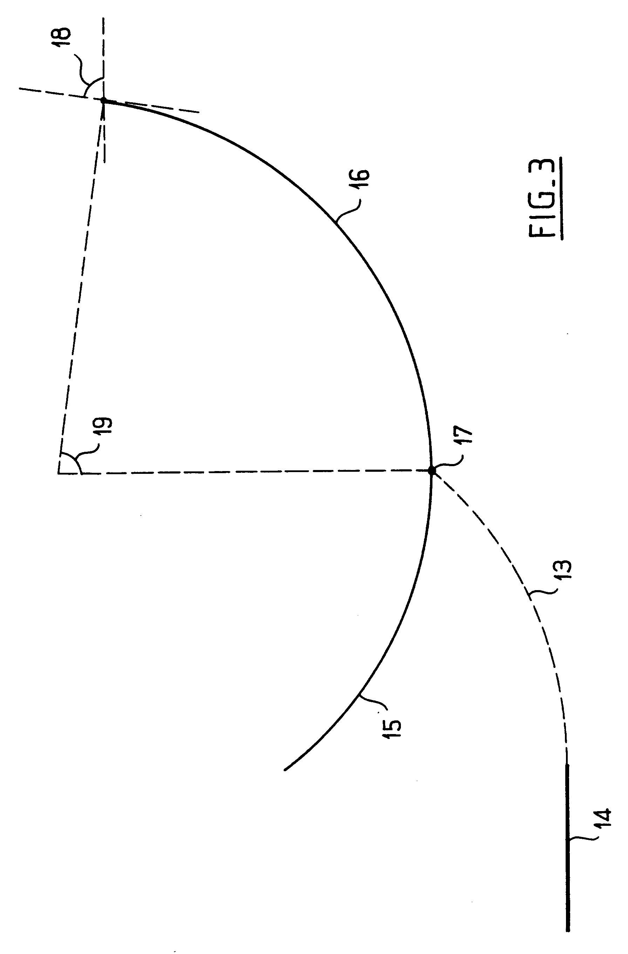

La figure 3 est une représentation schématique à l'échelle 1/10ème, d'une installation selon l'invention permettant la réalisation d'une feuille de verre, pouvant atteindre une longueur de 600 mm et entraînée avec une vitesse de défilement de 200 mm/s, présentant un rayon de courbure de 900 mm.

La courbe 13 représente le convoyeur mobile dans sa position permettant la réception des feuilles de verre. Cette courbe est tangente à la droite 14 qui représente le convoyeur d' amenée qui transporte les feuilles de verre depuis le four. De cette façon, le cheminement des feuilles de verre se fait bien sans cassure. La courbe 15 représente ce même convoyeur mobile dans sa seconde position, qui lui permet de communiquer la feuille de verre déjà bombée au convoyeur de refroidissement représentée ici par la courbe 16. Le point 17 simule l'axe de rotation autour duquel bascule le convoyeur mobile. Il est placé selon cette représentation à la limite entre la zone de bombage et la zone de refroidissement. D'autre part, la partie de refroidissement commence le plus bas possible, c'est-à-dire que la jonction des deux parties est tangente à l'horizontale. Cette position est importante car elle permet aux feuilles de verre de suivre une trajectoire ascendante. La vitesse est ainsi mieux contrôlée car elle n'est fonction que de l'entraînement des rouleaux moteurs et non pas de la gravité, ce qui serait le cas avec une trajectoire descendante. L'angle 18 formé par la tangente à l'extrémité de sortie du convoyeur de refroidissement 16 et l'horizontale doit être inférieur à 90° et de préférence le plus éloigné possible de 90°, de façon à faciliter la réception des feuilles de verre à l'issue du refroidissement. Dans cet exemple, l'angle 19 qui correspond à l'intersection des deux rayons passant par les extrémités de la courbe représentant le convoyeur de refroidissement, est identique à l'angle 18 puisque l'extrémité d'entrée du convoyeur est tangente à l'horizontale. Or la longueur minimum du convoyeur de refroidissement est imposée par la vitesse de défilement des feuilles de verre et le temps nécessaire au refroidissement. Sur la figure 3, la longueur de la zone de refroidissement est 1300 mm. Celle de la zone de bombage est de 800 mm. L'angle 18 vaut alors environ 83°. Il est ainsi très facile de procéder à l'évacuation des feuilles de verre bombée à l'issue du refroidissement.

Dans le tableau qui suit, sont présentés différentes valeurs de cet angle 18 pour des rayons de courbure et des dimensions de feuilles de verre (600 mm), et une vitesse de défilement (200 mm/s) donnés.

| rayon de courbure | angle 18 |
|---|---|
| 1000 | 74,5° |
| 950 | 78,4° |
| 900 | 82,8° |
| 850 | 87,6° |

Ces résultats montrent que l'invention permet de réaliser des feuilles de verre bombées selon une technique de défilement continu de ces feuilles de verre. Il est donc possible de concilier une réalisation de feuilles de verre à faible rayon de courbure avec un rendement de production élevé.

Il est encore possible de diminuer les rayons de courbure en associant une partie du dispositif de refroidissement au convoyeur basculant. En effet, la longueur nécessaire pour le formage est de l'ordre de 300 mm. Or, il est nécessaire dans notre cas, d'avoir un convoyeur basculant de 800 mm de sorte qu'en fonction de leur vitesse et de leur dimension les feuilles de verre passent d'une extrémité à l'autre de cette partie pendant le basculement. Il est donc possible de disposer une partie du dispositif de refroidissement sur environ les 500 mm restant du convoyeur basculant, une fois le formage réalisé. Ainsi la longueur imposée du convoyeur de refroidissement est moins importante et le rayon de courbure peut être encore diminué. Une telle disposition peut également permettre de modifier le rayon de formage simplement en changeant le convoyeur central mobile et en conservant le convoyeur de refroidissement. En effet, la feuille de verre, subissant un refroidissement sur le convoyeur mobile, est suffisamment figée pour supporter un passage sur un convoyeur de rayon légèrement différent, sans se déformer.

Cependant, ce type de réalisation reste difficile à mettre en oeuvre car il n'est pas aisé de rendre mobile le dispositif de refroidissement.

D'autre part, bien que ce type d'installation soit particulièrement intéressant pour réaliser des feuilles de verre avec des rayons de courbure inférieurs à un mètre, il est également adapté pour réaliser des rayons de courbure supérieurs et peut permettre alors de simplifier l'étape de réception des feuilles de verre bombée à l'issue de la phase de refroidissement, ou bien d'augmenter la vitesse de défilement des feuilles de verre, ou bien encore d'assurer un refroidissement plus important.

Cette installation a une productivité qui est légèrement diminuée par le temps nécessaire au basculement et qui entraîne un intervalle plus important entre deux feuilles de verre. Mais il est possible d'y remédier en faisant défiler les feuilles de verre deux par deux. En effet, la demande concernant des rayons de courbure inférieurs à un mètre concerne essentiellement des feuilles de verre de petites dimensions, il est donc possible d'en disposer deux de front sur le dispositif.

Il est également possible de disposer, si les dimensions le permettent, deux feuilles de verre, l'une derrière l'autre, sur le convoyeur mobile avant son basculement.

## Revendications

1. Procédé de bombage et de refroidissement, notamment par trempe thermique, de feuilles de verre (1), selon lequel une feuille de verre (1) défile successivement sur un convoyeur d'amenée (2) en sortie d'un four (3) chauffant les feuilles de verre (1) à la température de bombage, sur un convoyeur central (4), constitué par une série d'éléments tournants (5) disposés selon un profil courbe, et sur un convoyeur de refroidissement (12), caractérisé en ce que l'un au moins de ces trois convoyeurs est basculé pendant le défilement d'une feuille de verre (1) de sorte que celle-ci suive un chemin continu en passant successivement sur ces trois convoyeurs et en ce que l'angle (18) formé par la tangente à l'extrémité de sortie du convoyeur de refroidissement (12) au moment de la sortie d'une feuille de verre (1) et l'horizontale fait au plus un angle de 90°.

2. Installation pour la mise en oeuvre du procédé selon la revendication 1, comprenant un convoyeur d'amenée (2) en sortie d'un four (3) chauffant les feuilles de verre (1) à la température de bombage, un convoyeur central (4), constitué par une série d'éléments tournants (5) disposés selon un profil courbe, et un convoyeur de refroidissement (12), caractérisée en ce que l'un au moins de ces trois convoyeurs est basculant.

3. Installation selon la revendication 2, caractérisée en ce que le convoyeur central (4) est basculant.

4. Installation selon la revendication 3, caractérisée en ce que ledit profil courbe est un profil circulaire à concavité dirigée vers le haut.

5. Installation selon l'une des revendications 3 ou 4, caractérisée en ce que le convoyeur central (4) comporte une zone de refroidissement.

6. Installation selon les revendication 3 à 5, caractérisée en ce que le convoyeur de refroidissement (12) est constitué par une série d'éléments tournants (10, 11) disposés selon le même profil courbe que celui du convoyeur central (4).

7. Installation selon la revendication 5, caractérisée en ce que le convoyeur de refroidissement (12) est constitué par une série d'éléments tournants (10, 11) disposés selon un profil courbe présentant un rayon de courbure différent de celui du convoyeur central (4).

8. Installation selon l'une des revendications 3 à 7, caractérisée en ce que les dimensions du convoyeur central (4) sont telles qu'en début de basculement une feuille de verre (1) vient de s'engager sur ledit convoyeur (4) et qu'en fin de basculement l'extrémité avant de la feuille de verre arrive en bout dudit convoyeur (4).

9. Installation selon l'une des revendications 2 à 8, caractérisée en ce que d'éventuels éléments tournants supérieurs (8) du convoyeur central (4) à l'exception de celui ou ceux situés à la sortie de ce convoyeur, sont espacés de la surface courbe représentée par les éléments tournants inférieurs (5) de ce convoyeur, d'une distance supérieure d'au moins 0,3 mm, et généralement de l'ordre de 0,4 à 0,6 mm, à l'épaisseur des feuilles de verre à traiter.

10. Installation selon l'une des revendications 2 à 9, caractérisée en ce qu'à l'extrémité du convoyeur central (4), au moins un et de préférence un seul élément tournant supérieur (9) est monté espacé de l'élément tournant inférieur (5) qui lui fait face d'une distance telle qu'il est en appui sur la face supérieure des feuilles de verre (1) lorsqu'elles défilent sous lui.

11. Installation selon l'une des revendications 2 à 10, caractérisée en ce que les éléments tournants (5, 8, 9, 10, 11) sont des rouleaux cylindriques droits.

12. Installation selon l'une des revendications 2 à 10, caractérisée en ce que les éléments tournants (5, 8, 9, 10, 11) sont des éléments définissant un profil transversal courbe, par exemple du type rouleaux ventrus éventuellement associés à des diabolos, tiges contre-fléchies ou tiges cintrées.

13. Installation selon l'une des revendications 2 à 12, caractérisée en ce qu'elle comporte un moyen permettant d'évacuer les feuilles de verre à la sortie du convoyeur de refroidissement (12).

14. Installation selon l'une des revendications 2 à 13, caractérisée en ce que le rayon de courbure du profil formé par les éléments tournants constituant le convoyeur central (4) est compris entre 800 mm et l'infini.

## Claims

1. Process for the bending and cooling, particularly by thermal tempering, of glass sheets (1), according to which a glass sheet (1) passes successively on a feed conveyor (2) on leaving a furnace (3) heating the glass sheets (1) to the bending temperature, on a central conveyor (4), constituted by a series of rotary elements (5) arranged in accordance with a curved profile, and on a cooling conveyor (12), characterized in that at least one of these three conveyors is tilted during the passage of a glass sheet (1), so that the latter follows a continuous path passing successively on the said three conveyors, and in that the angle (18) formed by the tangent to the discharge end of the cooling conveyor (12) at the time of discharge of a glass sheet (1) and the horizontal is at the most 90°.

2. Installation for performing the process according to claim 1, comprising a feed conveyor (2) on leaving a furnace (3) heating the glass sheets (1) to the bending temperature, a central conveyor (4) constituted by a series of rotary elements (5) arranged in accordance with a curved profile, and a cooling conveyor (12), characterized in that at least one of these three conveyors tilts.

3. Installation according to claim 2, characterized in that the central conveyor (4) tilts.

4. Installation according to claim 3, characterized in that said curved profile is a circular profile with an upwardly directed concavity.

5. Installation according to one of the claims 3 or 4, characterized in that the central conveyor (14) has a cooling area.

6. Installation according to claims 3 to 5, characterized in that the cooling conveyor (12) is constituted by a series of rotary elements (10, 11) arranged along the same curved profile as that of the central conveyor (4).

7. Installation according to claim 5, characterized in that the cooling conveyor (12) is constituted by a series of rotary elements (10, 11) arranged along a curved profile having a radius of curvature different from that of the central conveyor (4).

8. Installation according to one of the claims 3 to 7, characterized in that the dimensions of the central conveyor (4) are such that at the start of tilting a glass sheet (1) engages on said conveyor (4) and that at the end of tilting the front end of the glass sheet arrives at the end of said conveyor (4).

9. Installation according to one of the claims 2 to 8, characterized in that any upper, rotary elements (8) of the central conveyor (4), with the exception of that or those located at the exit from said conveyor, are spaced from the curved surface represented by the lower, rotary elements (5) of said conveyor by a distance exceeding at least 0.3 mm and generally approximately 0.4 to 0.6 mm, at the thickness of the glass sheets to be treated.

10. Installation according to one of the claims 2 to 9, characterized in that at the end of the central conveyor (14), at least one and preferably a single, upper, rotary element (8) is mounted in spaced manner with respect to the lower, rotary element (5) facing it by a distance such that it bears on the upper face of the glass sheets (1) when they travel beneath it.

11. Installation according to one of the claims 2 to 10, characterized in that the rotary elements (5, 8, 9, 10, 11) are straight, cylindrical rollers.

12. Installation according to one of the claims 2 to 10, characterized in that the rotary elements (5, 8, 9, 10, 11) are elements defining a curved, transverse profile, e.g. of the bellied roller type, optionally associated with double cones, bent rods or cambered rods.

13. Installation according to one of the claims 2 to 12, characterized in that it has a means making it possible to discharge the glass sheets at the exit from the cooling conveyor (12).

14. Installation according to one of the claims 2 to 13, characterized in that the radius of curvature of the profile formed by the rotary elements constituting the central conveyor (4) is between 800 mm and infinity.

## Patentansprüche

1. Verfahren zum Biegen und Abkühlen, insbesondere durch thermisches Vorspannen, von Glasscheiben (1), gemäß welchem eine Glasscheibe (1) nacheinander auf einem Zuführungsförderer (2) im Ausgang eines Ofens (3), in dem die Glasscheiben (1) auf Biegetemperatur erhitzt werden, auf einem mittleren Förderer (4), der aus einer Reihe sich drehender Elemente (5) besteht, die in einem gekrümmten Profil angeordnet sind, und auf einem Kühlförderer (12) durchläuft, **dadurch gekennzeichnet, daß** mindestens einer der drei Förderer während des Durchlaufs der Glasscheibe (1) derart kippbar ist, daß diese eine ununterbrochene Bahn verfolgt, wobei sie sukzessive auf den drei Förderern durchläuft, **und daß** der Winkel (18), welcher zwischen der Tangente am Ende des Ausgangs des Kühlförderers (12) zu dem Zeitpunkt, zu welchem ihn eine Glasscheibe (1) verläßt, und der Waagerechten gebildet wird, höchstens 90° beträgt.

2. Vorrichtung zur Durchführung des Verfahrens nach Anspruch 1, welche einen Zuführungsförderer (2) im Ausgang eines Ofens (3), in welchem die Glasscheiben (1) auf Biegetemperatur erhitzt werden, einen mittleren Förderer (4), der aus einer Reihe sich drehender Elemente (5) besteht, die in einem gekrümmten Profil angeordnet sind, und einen Kühlförderer (12) umfaßt, **dadurch gekennzeichnet, daß** mindestens einer der drei Förderer kippbar ist.

3. Vorrichtung nach Anspruch 2, **dadurch gekennzeichnet, daß** der mittlere Förderer (4) kippbar ist.

4. Vorrichtung nach Anspruch 3, **dadurch gekennzeichnet, daß** das gekrümmte Profil ein kreisförmiges Profil mit nach oben gerichteter Konkavität ist.

5. Vorrichtung nach Anspruch 3 oder 4, **dadurch gekennzeichnet, daß** der mittlere Förderer (4) eine Kühlzone enthält.

6. Vorrichtung nach den Ansprüchen 3 bis 5, **dadurch gekennzeichnet, daß** der Kühlförderer (12) aus einer Reihe sich drehender Elemente (10, 11) besteht, die gemäß demselben gekrümmten Profil wie das des mittleren Förderers (4) angeordnet sind.

7. Vorrichtung nach Anspruch 5, **dadurch gekennzeichnet, daß** der Kühlförderer (12) aus einer Reihe sich drehender Elemente (10, 11) besteht, die gemäß einem gekrümmten Profil angeordnet sind, das einen Krümmungsradius besitzt, der sich von dem des mittleren Förderers (4) unterscheidet.

8. Vorrichtung nach einem der Ansprüche 3 bis 7, **dadurch gekennzeichnet, daß** die Abmessungen des mittleren Förderers (4) derart sind, daß zu Beginn des Kippvorgangs eine Glasscheibe (1) auf dem Förderer (4) erfaßt wird und die Vorderkante der Glasscheibe nach dem Kippvorgang am Ende dieses Förderers (4) ankommt.

9. Vorrichtung nach einem der Ansprüche 2 bis 8, **dadurch gekennzeichnet, daß** mögliche obere sich drehende Elemente (8) des mittleren Förderers (4), ausgenommen dasjenige oder diejenigen, das/die sich am Ausgang des Förderers befindet/befinden, von der gekrümmten Fläche, die von den unteren sich drehenden Elementen (5) dieses Förderers dargestellt wird, einen Abstand besitzen, der mindestens um 0,3 mm und im allgemeinen um etwa 0,4 bis 0,6 mm größer als die Dicke der zu behandelnden Glasscheiben ist.

10. Vorrichtung nach einem der Ansprüche 2 bis 9, **dadurch gekennzeichnet, daß** am Ende des mittleren Förderers (4) mindestens ein und vorzugsweise ein einziges oberes sich drehendes Element (9) mit einem solchen Abstand von dem unteren sich drehenden Element (5), das ihm gegenübersteht, angebracht ist, daß es auf der Oberseite der Glasscheiben (1) aufliegt, wenn diese unter ihm durchlaufen.

11. Vorrichtung nach einem der Ansprüche 2 bis 10, **dadurch gekennzeichnet, daß** die sich drehenden Elemente (5, 8, 9, 10, 11) gerade zylindrische Rollen sind.

12. Vorrichtung nach einem der Ansprüche 2 bis 10, **dadurch gekennzeichnet, daß** die sich drehenden Elemente (5, 8, 9, 10, 11) Elemente, die ein gekrümmtes Querprofil bilden, beispielsweise bauchige Rollen, die gegebenenfalls mit doppelkegeligen Rollen vereinigt sind, Stangen mit Überhöhungen oder gebogene Stangen, sind.

13. Vorrichtung nach einem der Ansprüche 2 bis 12, **dadurch gekennzeichnet, daß** sie ein Mittel umfaßt, durch welches die Glasscheiben am Ausgang des Kühlförderers (12) abgenommen werden können.

14. Vorrichtung nach einem der Ansprüche 2 bis 13, **dadurch gekennzeichnet, daß** der Krümmungsradius des Profils, das von den sich drehenden Elementen geformt wird, die den mittleren Förderer (4) bilden, 800 mm bis Unendlich beträgt.
